# FASCICULE DE BREVET EUROPEEN

(11) **EP 1 697 160 B1**
(45) Date de publication et mention de la délivrance du brevet: **25.08.2010**
(21) Numéro de dépôt: 03819258.9
(22) Date de dépôt: 16.12.2003
(51) Int. Cl.: B64D 11/06

(54) **Siège destiné à un aéronef**
Sitz für ein Flugzeug
Seat for an Aircraft

(30) Priorité: 10.12.2003 FR 0314450
(43) Date de publication de la demande: 06.09.2006
(73) Titulaire: Airbus, 31707 Blagnac (FR)
(72) Inventeur: SAINT-JALMES, Bruno, F-31400 Toulouse (FR); REZAG, André, F-31200 Toulouse (FR); ZANEBONI, Jason, F-31700 Blagnac (FR)
(74) Mandataire: Hartmann, Jean-Luc
(86) Numéro de dépôt international: PCT/FR2003/003737
(87) Numéro de publication internationale: WO 2005/065990

(56) Documents cités:
- CH-A- 287 456
- FR-A- 2 671 530
- GB-A- 468 110
- US-A- 1 695 101
- US-A- 2 642 922
- US-A- 4 081 051
- US-A- 6 053 569

## Description

La présente invention concerne un siège destiné à un aéronef.

Dans les véhicules de transport en commun, les sièges sont le plus souvent disposés une fois pour toutes dans une configuration donnée. Les sièges présentent éventuellement des "degrés de liberté" permettant par exemple au dossier de s'incliner ou même parfois de convertir le siège en couchette. Par contre, dans les véhicules de transport en commun, l'orientation des sièges est généralement figée. Dans un avion de ligne, tous les sièges sont le plus souvent orientés vers l'avant, de telle sorte que les passagers voyagent dans le sens du déplacement de l'avion. Dans un train, il existe des sièges disposés face à face, des ensembles de sièges permettant de voyager dans le sens de la marche du train et des ensembles de sièges permettant de voyager dans le sens contraire de la marche du train.

Il existe dans certains véhicules des sièges pivotants et montés sur glissières permettant de moduler l'espace intérieur d'un véhicule. On retrouve par exemple de tels sièges dans certains véhicules automobiles de type monospace. Ce type de siège existe également dans des aménagements particuliers de cabine d'aéronef ou de train pour des usages privés.

L'inconvénient des solutions connues permettant de moduler l'espace intérieur d'un véhicule est qu'il est nécessaire de prévoir de l'espace autour du siège modulable notamment pour pouvoir le faire pivoter. Il y a donc une perte de place importante. Ceci n'est pas compatible avec les contraintes économiques existant dans les transports en commun. En effet, dans un espace donné, on cherche toujours à faire voyager le plus grand nombre de voyageurs pour des questions de rentabilité évidentes.

Du document US 6 053 569, on connaît un siège, qui montre les caractéristiques du préambule de la revendication 1.

La présente invention a alors pour but de rendre un espace intérieur d'un aéronef modulable sans modifier, en terme de nombre de sièges, la capacité de cet espace. De préférence, le changement de configuration de cet espace devra pouvoir être réalisé rapidement. Il sera préférable que la solution proposée n'entraîne pas de surcharge sensible.

La présente invention propose un siège destiné à un véhicule, ce siège comportant une assise et un dossier mobile. Selon l'invention, ce siège comporte des moyens de guidage, dits premiers moyens de guidage, pour le déplacement du dossier depuis un bord de l'assise vers un bord opposé de celle-ci. Un tel siège permet la mise en oeuvre d'un procédé tel que décrit ci-dessus.

Dans une forme de réalisation préférée, un tel siège comporte de préférence aussi des seconds moyens de guidage pour le guidage en rotation du dossier sur environ 180°. Comme indiqué plus haut, c'est alors toujours la même face du dossier qui sert d'appui au dos d'un passager. La face opposée peut alors être munie d'accessoires, tels par exemple une tablette. Dans cette forme de réalisation, les moyens de guidage en rotation comportent un axe de rotation correspondant sensiblement à un axe de symétrie du dossier. Cet axe de rotation est par exemple sensiblement perpendiculaire à l'assise du siège.

L'invention prévoit que le dossier est monté sur l'assise par l'intermédiaire d'un ensemble mobile comportant d'une part une base mobile entre un bord de l'assise et un bord opposé et d'autre part un support monté pivotant sur la base. Dans cette forme de réalisation, les premiers moyens de guidage assurent par exemple le guidage de la base par rapport à l'assise et les seconds moyens de guidage assurent par exemple le guidage en rotation du support par rapport à la base. Ici, les premiers moyens de guidage peuvent comporter une rainure parallèle au déplacement du dossier, réalisée dans l'assise du siège et dans laquelle pénètre une partie de la base de forme adaptée.

Lorsque le siège de l'invention comporte une base mobile et un support, la base mobile se présente sous la forme d'un étrier dont la base s'étend d'un bord latéral à l'autre de l'assise et dont chaque branche s'étend sensiblement parallèlement à un bord latéral et est recourbée à son extrémité libre sous l'assise.

Pour permettre le déplacement de la base mobile, cette dernière comporte par exemple de part et d'autre de l'assise une poignée permettant de la déplacer. Dans une autre forme de réalisation, pour déplacer la base mobile, les premiers moyens de guidage comportent un levier de chaque côté de l'assise ; chaque levier est guidé à chacune de ses extrémités dans une glissière et la base mobile est reliée au levier.

La présente invention concerne également un ensemble de sièges, caractérisé en ce qu'il comporte au moins un siège tel que décrit ci-dessus.

Elle concerne aussi un véhicule destiné au transport de passagers, comportant au moins un tel siège. Ce véhicule peut être en particulier un aéronef.

Des détails et avantages de la présente invention ressortiront mieux de la description qui suit, faite en référence au dessin schématique annexé sur lequel :
Les figures 1 à 4 montrent en vue de côté un siège selon l'invention dans quatre positions distinctes,
Les figures 5a à 5h représentent le siège des figures 1 à 4 en vue de dessus dans huit positions distinctes,
La figure 6 est une vue de face à échelle agrandie d'une première forme de réalisation d'un mécanisme permettant de déplacer le dossier d'un siège selon l'invention,
La figure 7 est une vue de détail représentant des moyens de verrouillage pour un siège du type de celui représenté partiellement sur la figure 6,
La figure 8 est une vue de détail montrant un verrou représenté sur la figure 7, et
La figure 9 est une vue de côté d'une seconde forme de réalisation d'un siège selon l'invention.
Les figures du dessin joint représentent un siège tel qu'on en trouve habituellement dans un aéronef. Toutefois l'invention peut s'appliquer à tous types de véhicules et peut aussi bien concerner par exemple un train ou un autocar.

De manière classique, les sièges représentés au dessin comportent un châssis 2, une assise 4, un dossier 6 surmonté d'un appui-tête 8 ainsi que deux accoudoirs 10.

Le châssis 2 permet la fixation du siège sur un plancher 12. Dans un aéronef, ce plancher intègre de manière classique des rails longitudinaux ancrés à la structure de l'aéronef et présentant des points d'attache répartis le long de chaque rail avec un pas prédéterminé.

Dans les formes de réalisation représentées au dessin, l'assise 4 est une assise fixe par rapport au châssis 2. Cette assise comporte deux bords longitudinaux 14 et deux bords transversaux 16.

Dans la présente description, les orientations sont définies par rapport à un passager assis sur le siège. Ainsi, les bords longitudinaux 14 correspondent aux bords se trouvant à droite et à gauche d'un passager assis sur le siège tandis que les bords transversaux 16 sont les bords reliant ces deux bords longitudinaux 14.

Alors que l'assise 4 est généralement dans un plan sensiblement horizontal, le dossier 6 est quant à lui généralement sensiblement vertical. Sa forme est adaptée à la morphologie humaine et elle est donc légèrement incurvée. Ce dossier présente une forme générale rectangulaire. Il présente ainsi un bord inférieur 18, un bord supérieur 20 et deux montant latéraux 22. En position d'utilisation, le bord inférieur 18 du dossier 6 se trouve face à un bord transversal 16 de l'assise 4 en étant plus ou moins éloigné de ce bord transversal 16. L'assise 4 et le dossier 6 forment ainsi sensiblement un dièdre.

De manière classique, l'appui-tête 8 est fixé au niveau du bord supérieur 20 du dossier 6 tandis que les accoudoirs 10 sont chacun fixés sur un montant latéral 22 du dossier 6.

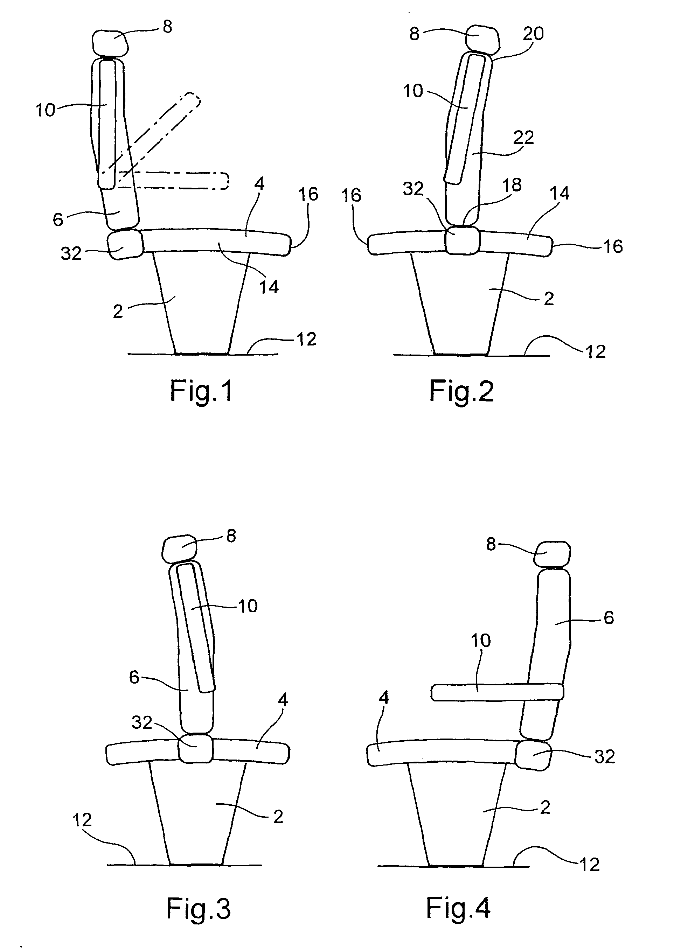

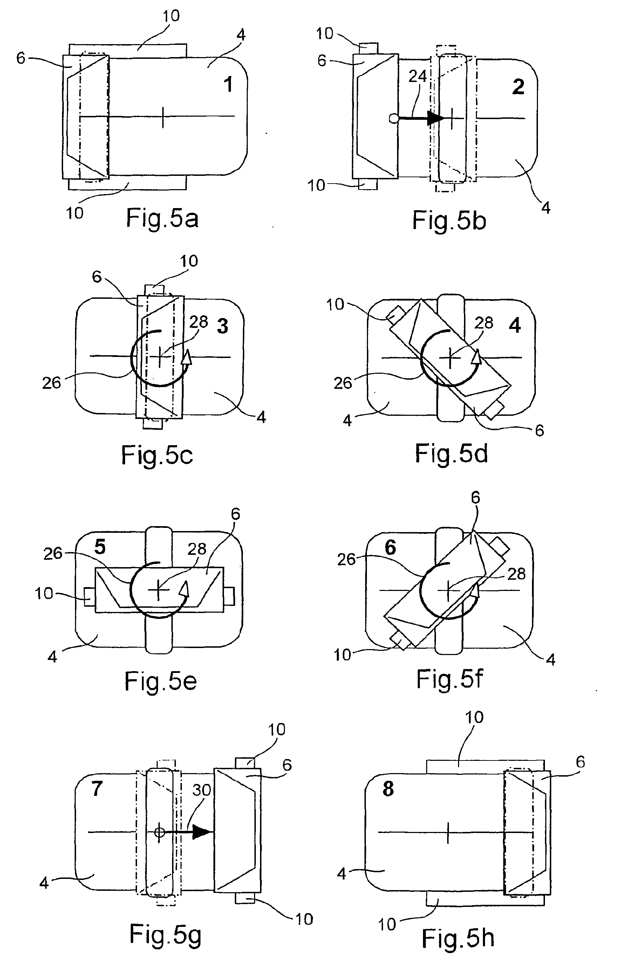

De manière originale, le dossier 6 d'un siège selon l'invention peut prendre place au niveau d'un bord transversal 16 du siège ou du bord transversal 16 opposé. Les figures 1 à 4 représentent les diverses étapes permettant de faire passer le dossier 6 d'un bord transversal 16 à l'autre. Les figures 5a à 5h montrent en vue de dessus ce même mouvement du dossier. On considère que les vues de la figure 5 représentent le même siège que les figures 1 à 4.

Sur la figure 5a, le siège représenté est en position normale d'utilisation. Le dossier 6 est face à un bord transversal 16 de l'assise 4 et les accoudoirs 10 sont rabattus dans une position sensiblement horizontale. Ces accoudoirs 10 sont tout d'abord relevés. Ce mouvement est suggéré sur la figure 1, une position des accoudoirs 10 étant représentée en trait plein et deux autres positions de ceux-ci étant dessinées en traits mixtes. La position avec les accoudoirs 10 relevés correspond aux figures 1 et 5b. Sur cette dernière figure, une flèche 24 suggère le déplacement du dossier 6 vers une position centrale représentée en traits mixtes.

Une fois arrivé dans cette position centrale (figures 2 et 5c), le dossier 6 commence à pivoter comme suggéré par la flèche 26. Les figures 5d à 5f montrent des positions intermédiaires du dossier 6 au cours de son pivotement. En tout, le dossier 6 tourne de 180° autour d'un axe vertical 28 médian. Après cette rotation, on trouve le dossier dans la position représentée sur la figure 3. Le dossier 6 est alors poussé vers le second bord transversal 16 du siège comme suggéré par la flèche 30 de la figure 5g. Les accoudoirs 10 sont alors rabattus de leur position sensiblement verticale dans une position sensiblement horizontale comme représenté sur les figures 4 et 5h. On retrouve alors le même siège avec une orientation différente. Ainsi, un passager voyageant dans le sens de la marche de l'aéronef sur le siège de la figure 5a voyage dans le sens inverse de la marche quant il est assis sur le même siège dans sa configuration représentée sur le figure 5h.

Le fait de mouvoir le dossier 6 comme décrit ci-dessus et illustré sur les figures 1 à 5 permet d'obtenir une grande modularité dans l'agencement d'une cabine d'aéronef ou dans tout compartiment destiné à accueillir des passagers. Dans un tel espace destiné à recevoir des passagers, on peut ainsi créer à la demande des sièges qui se font face. Si deux passagers voyagent ensemble, ils peuvent ainsi choisir de voyager soit face à face, soit côte à côte. Il devient également facile pour quatre voyageurs voyageant ensemble de disposer quatre sièges en face à face. Toutes sortes de combinaisons sont envisageables. On peut prévoir d'alterner par exemple l'orientation des sièges d'une rangée à l'autre. Les combinaisons sont nombreuses. Pour un ensemble de n sièges il y a a priori 2ⁿ combinaisons possibles.

Cette grande modularité s'obtient tout en pouvant conserver des sièges côte à côte. Il n'est pas nécessaire de prévoir un espacement entre deux sièges voisins pour permettre le pivotement de ceux-ci. La solution proposée est donc économique en terme d'espace. Dans un espace donné on peut en effet placer un grand nombre de sièges avec une modularité importante.

Dans un aéronef de l'art antérieur, pour obtenir une même modularité dans un volume donné avec une même capacité en terme de nombre de passagers, il fallait envisager de démonter individuellement chaque siège et de le retourner avant de le refixer sur le plancher de la cabine. Une telle opération peut être envisagée très exceptionnellement mais est très coûteuse en temps. La solution selon l'invention peut quant à elle être envisagée par exemple dans un aéronef pour proposer par exemple aux passagers de la classe affaire de choisir une configuration particulière pour des passagers voyageant ensemble. Pour chaque vol l'espace intérieur de la cabine peut ainsi être modulé à la demande.

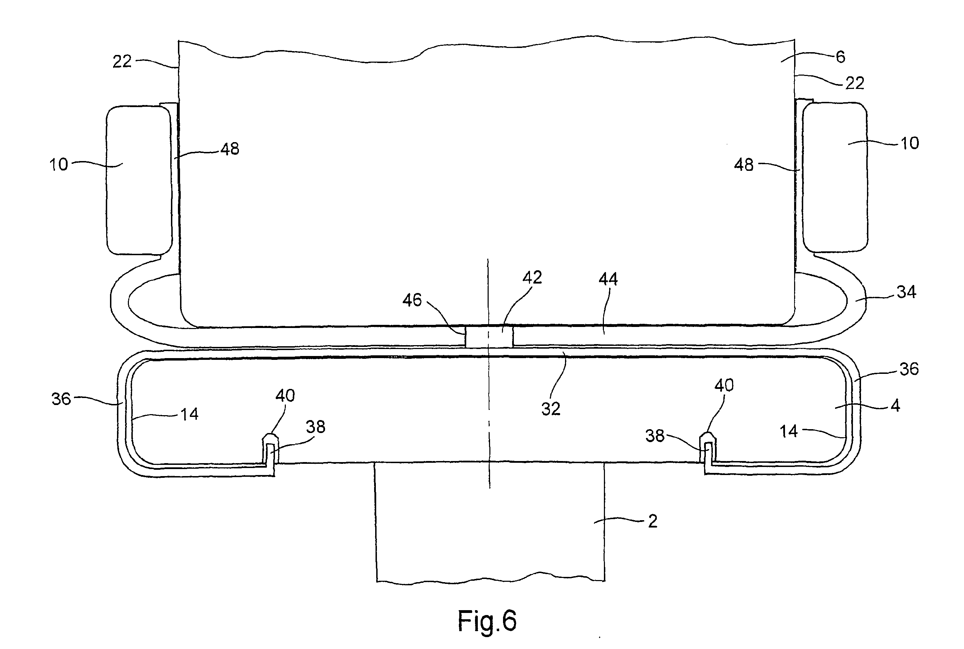

Les figures 6 à 9 montrent des moyens techniques permettant sur un siège de déplacer le dossier tel qu'expliqué à l'aide des figures 1 à 5.

La figure 6 montre une forme de réalisation préférentielle d'un dispositif permettant le déplacement d'un dossier tel que représenté sur les figures 1 à 5. On reconnaît sur cette figure 6 le châssis 2, l'assise 4, une partie du dossier 6 ainsi que les deux accoudoirs 10. Le dossier 6 est relié à l'assise 4 par l'intermédiaire d'un ensemble mobile comportant d'une part une base mobile 32 et d'autre part un support 34.

La base mobile 32 se présente par exemple sous la forme d'une bande métallique disposée transversalement par rapport à l'assise 4 et repliée à ses extrémités. Cette base mobile 32 présente alors en vue de face (cf. figure 6) la forme d'un étrier. La base de cet étrier vient en appui sur la surface supérieure de l'assise 4, c'est-à-dire la surface destinée à recevoir un passager. Les branches 36 sont recourbées vers le bas et s'étendent parallèlement aux bords longitudinaux 14 de l'assise 4. Les extrémités libres des branches 36 sont recourbées sous l'assise 4 et présentent chacune un retour de guidage 38. Chacun des retours de guidage 38 est logé dans une rainure longitudinale 40 réalisée dans la surface inférieure de l'assise 4. Les retours de guidage 38 coopèrent ainsi avec les rainures 40 pour guider la base mobile 32 dans un mouvement de translation longitudinal par rapport à l'assise 4.

Le support 34 est monté pivotant sur la base mobile 32. A cet effet, la base mobile 32 porte en son centre un tourillon 42 faisant saillie vers le dossier 6. Le support 34 se présente sous la forme d'un U. Sa base 44 repose sur la base de l'étrier formant la base mobile 32. Elle présente en son centre un alésage 46 coopérant avec le tourillon 42.

Le dossier 6 est fixé entre les branches 48 du support 34. Ainsi, les montants latéraux 22 du dossier 6 viennent en appui sur la face intérieure des branches 48 du support 34. Ces branches 48 portent par exemple les accoudoirs 10.

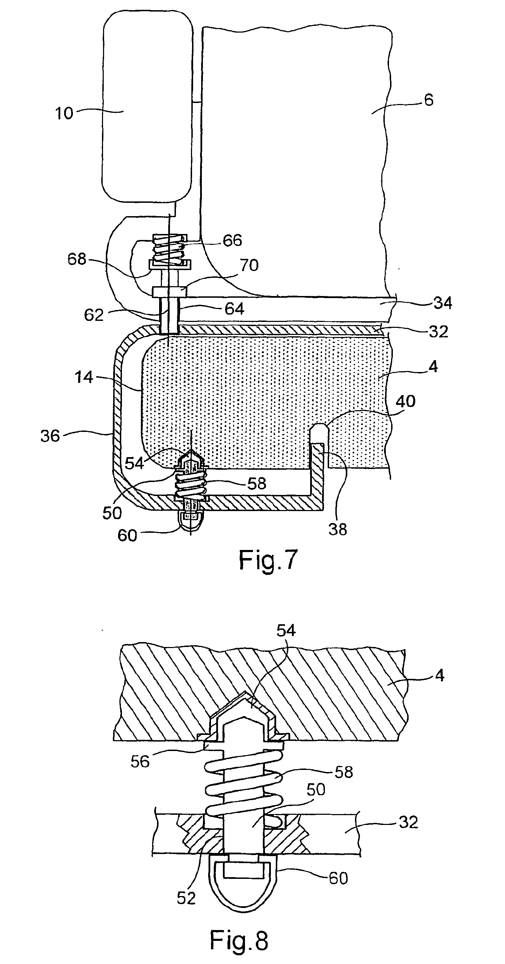

Les figures 7 et 8 représentent des moyens de verrouillage permettant d'une part de verrouiller la base mobile 32 par rapport à l'assise 4 et d'autre part le support 34 et le dossier 6 par rapport à la base mobile 32.

La figure 8 représente un verrou 50 pour le blocage de la base mobile 32 par rapport à l'assise 4. Ce verrou 50 est de forme générale cylindrique. Il est monté sur la base mobile 32 sous l'assise 4 comme on peut le voir sur la figure 7. Ce verrou 50 est monté coulissant dans un alésage 52 réalisé dans la base mobile 32. L'extrémité du verrou 50 orientée du côté de l'assise 4 vient se placer dans un logement 54 prévu à cet effet. Du côté du logement 54, le verrou 50 présente une collerette 56. Cette dernière sert de butée pour limiter la course de l'extrémité du verrou 50 à l'intérieur du logement 54 de l'assise 4. Elle sert également, sur sa face opposée à celle servant de butée, d'appui pour un ressort 58. Ce dernier prend également appui sur la base mobile 32. Un épaulement est avantageusement réalisé au niveau de cette base mobile 32 pour recevoir l'extrémité du ressort 58 comme on peut le voir sur la figure 8. Le ressort 58 précontraint ainsi le verrou 50 dans sa position verrouillée. Pour déverrouiller la base mobile 32, il suffit de tirer sur le verrou 50 à l'encontre de la précontrainte exercée par le ressort 58. Un anneau de manoeuvre 60 est prévu à cet effet.

Le verrouillage du support 34 sur la base mobile 32 est réalisé de manière un peu similaire. Un verrou 62 cylindrique est monté coulissant dans un alésage 64 du support 34. Ce verrou 62 coopère avec un trou réalisé dans la base mobile 32 et destiné à recevoir une extrémité du verrou 62. Un ressort 66 précontraint le verrou 62 en position verrouillée. Le ressort 66 vient en appui d'une part sur l'extrémité du verrou 62 opposée à l'extrémité destinée à coopérer avec la base mobile 32 et d'autre part sur une surface prévue à cet effet sur le support 34. Le support 34 représenté au dessin (figures 6 et 7) comporte à la base de chaque branche 48 une concavité orientée vers l'intérieur du U formé par le support 34. Le système de verrouillage du support 34 sur la base mobile 32 est disposé à l'intérieur de cette concavité. Pour déverrouiller ce verrou 62, il suffit d'agir à l'encontre du ressort 66. Un épaulement 68 est prévu pour faciliter l'action sur le verrou 62. Comme représenté au dessin, pour limiter la course du verrou 62 dans le sens d'un verrouillage, on peut prévoir une collerette 70 pour venir en appui sur le support 34 autour de l'alésage 64.

On peut prévoir un seul verrou 50 ou un seul verrou 62. Toutefois, pour assurer un meilleur verrouillage, on prévoit de préférence symétriquement un second verrou 50 et/ou 62. L'assise 4 comporte pour chaque verrou 50 deux logements 54 destinés à recevoir l'extrémité du verrou 50 correspondant, chacun de ces logements 54 se trouvant à proximité d'un bord transversal 16.

Pour le verrou 62, si un seul verrou est prévu, il faudra prévoir deux trous dans la base mobile 32 pour pouvoir assurer le blocage du dossier 6 et de son support 34 dans deux positions distinctes. Par contre, si deux verrous 62 sont prévus en les disposant symétriquement, seuls deux trous seront nécessaires dans la base mobile 32 pour recevoir les extrémités de ces verrous 62, le pivotement du support 34 par rapport à la base mobile 32 étant de 180°.

Une fois la base mobile 32 déverrouillée par rapport à l'assise 4, on peut prévoir des poignées pour déplacer cette base mobile 32 par rapport à l'assise 4. Ces poignées peuvent être formées par les branches 36 de la base mobile 32 lorsque celles-ci présentent la forme d'étrier décrite plus haut. Pour faciliter la manoeuvre de déplacement de la base mobile 32, on prévoit avantageusement que les branches 36 sont légèrement espacées des bords longitudinaux 14 de l'assise 4.

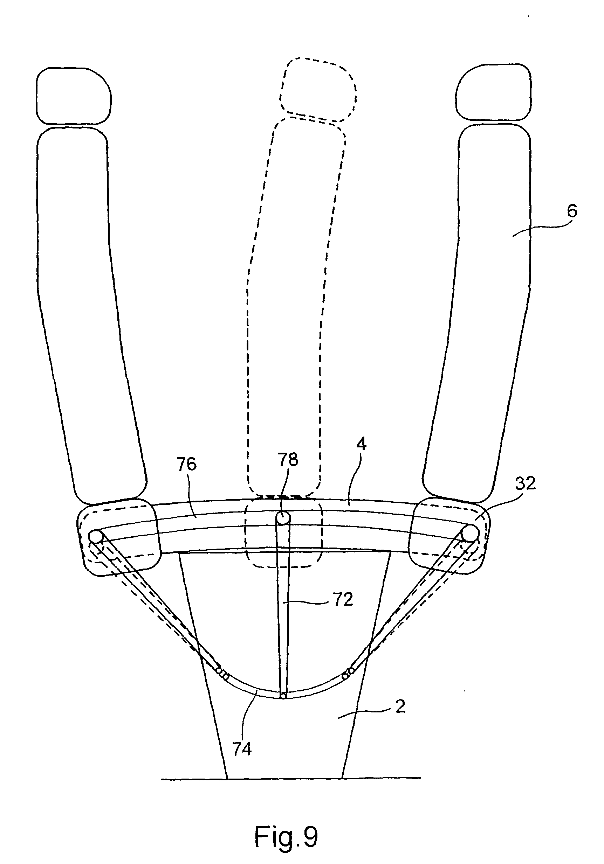

La figure 9 représente une variante de réalisation d'un siège selon l'invention. On retrouve la même structure de siège et des moyens de déplacement du dossier 6 par rapport à l'assise 4 similaires, c'est-à-dire comportant une base mobile 32 entre un bord transversal 16 de l'assise 4 et le bord transversal 16 opposé ainsi qu'un support 34 portant le dossier 6 monté pivotant sur la base mobile 32. Les différences de réalisation se situent ici au niveau du guidage de la base mobile 32 par rapport à l'assise 4 ainsi qu'au verrouillage de cette base mobile par rapport à cette assise.

Dans cette forme de réalisation, un levier 72 relie le châssis 2 à la base 32 et à l'assise 4. Chaque levier 72 est guidé au niveau de son extrémité inférieure dans une rainure 74 de guidage réalisé par exemple dans une face latérale du châssis 2. Cette rainure 74 peut également être rapportée sur le châssis 2.

L'extrémité supérieure de chaque levier 72 est guidée quant à elle dans une rainure 76 réalisée dans un bord longitudinal 14 de l'assise 4. On peut par exemple prévoir au niveau de l'extrémité supérieure de chaque levier 72 le montage d'un axe 78 traversant la branche 36 correspondante de la base mobile 32 et venant en prise dans la rainure 76. De cette manière, lorsque l'on manoeuvre les leviers 72, la base mobile 32 est entraînée et guidée par rapport à la rainure 76.

Dans cette forme de réalisation, pour réaliser le verrouillage, on prévoit à chaque extrémité de la rainure 76 un décrochement vers le bas. Une fois le levier 72 en butée au fond d'une extrémité de la rainure 76, il suffit de mettre l'extrémité de l'axe 78 dans le décrochement prévu à cet effet pour verrouiller le levier 72 et donc également la base mobile 32 dans sa position.

Ces deux variantes de réalisation d'un siège permettent d'obtenir la modularité décrite plus haut dans un espace intérieur d'un véhicule destiné à recevoir des passagers. Par rapport à un siège "classique" le surcoût d'un siège selon l'invention est limité. En outre, la masse du siège reste sensiblement inchangée. De ce fait, de tels sièges selon l'invention peuvent également trouver leur place dans un aéronef.

La présente invention ne se limite pas aux formes de réalisation décrites ci-dessus à titre d'exemples non limitatifs. Elle concerne aussi les variantes de réalisation à la portée de l'homme du métier dans le cadre des revendications ci-après.

Ainsi par exemple, d'autres mécanismes pourraient être prévus pour assurer le déplacement du dossier par rapport à l'assise. On pourrait prévoir deux glissières sur chaque côté de l'assise ou bien même une glissière centrale. Le pivotement de 180° du dossier est quant à lui éventuellement optionnel. En effet, si le dossier est conçu comme étant un dossier réversible se présentant par exemple sous la forme d'un dossier "biconcave".

Dans les exemples décrits, les dossiers sont pivotants par rapport à un axe sensiblement perpendiculaire au plan de l'assise. Il est également envisageable de faire pivoter le dossier par rapport à un axe sensiblement horizontal (et donc sensiblement parallèle à l'assise). On choisit alors par exemple un axe horizontal médian. Ceci permet de prévoir également une inclinaison du dossier. On peut de cette manière prévoir de faire pivoter le dossier soit de quelques degrés autour de son axe de pivotement, soit d'environ 180°. Lorsqu'il y a pivotement du dossier, ce pivotement peut être réalisé lorsque le dossier se trouve sensiblement au centre de l'assise, comme décrit plus haut, mais également dans toute autre position relative du dossier par rapport à l'assise.

## Revendications

1. Siège destiné à un aéronef, ce siège comportant une assise (4), un dossier (6) mobile, ainsi que des moyens de guidage, dits premiers moyens de guidage, pour le déplacement du dossier (6) depuis un bord (16) de l'assise vers un bord (16) opposé de celle-ci,
dans lequel le dossier (6) est monté sur l'assise (4) par l'intermédiaire d'un ensemble mobile comportant d'une part une base mobile (32) entre un bord (16) de l'assise et un bord (16) opposé et d'autre part un support (34) monté pivotant sur la base mobile (32),
**caractérisé en ce que** la base mobile (32) se présente sous la forme d'un étrier dont la base s'étend d'un bord latéral (14) à l'autre de l'assise (4) et dont chaque branche (36) s'étend sensiblement parallèlement à un bord latéral (14) et est recourbée à son extrémité libre sous l'assise (4).

2. Siège selon la revendication 1, **caractérisé en ce qu'**il comporte en outre des seconds moyens de guidage pour le guidage en rotation du dossier (6) sur environ 180°.

3. Siège selon la revendication 2, **caractérisé en ce que** les moyens de guidage en rotation comportent un axe de rotation (42) correspondant sensiblement à un axe de symétrie du dossier (6).

4. Siège selon l'une des revendications 2 ou 3, **caractérisé en ce que** les moyens de guidage en rotation guident le dossier (6) en rotation autour d'un axe sensiblement perpendiculaire à l'assise (4) du siège.

5. Siège selon l'une des revendications 2 à 4, **caractérisé en ce que** les premiers moyens de guidage assurent le guidage de la base mobile (32) par rapport à l'assise (4) et **en ce que** les seconds moyens de guidage assurent le guidage en rotation du support (34) par rapport à la base mobile (32).

6. Siège selon la revendication 5, **caractérisé en ce que** les premiers moyens de guidage comportent une rainure (40) parallèle au déplacement du dossier (6), réalisée dans l'assise (4) du siège et dans laquelle pénètre une partie (38) de la base mobile (32) de forme adaptée.

7. Siège selon l'une des revendications 1 à 6, **caractérisé en ce que** la base mobile (32) comporte de part et d'autre de l'assise (4) une poignée permettant de la déplacer.

8. Siège selon l'une des revendications 1 à 6, **caractérisé en ce que** les premiers moyens de guidage comportent un levier (72) de chaque côté de l'assise (4), **en ce que** chaque levier (72) est guidé à chacune de ses extrémités dans une glissière (74, 76), et **en ce que** la base mobile (32) est reliée au levier (72).

9. Ensemble de sièges, **caractérisé en ce qu'**il comporte au moins un siège selon l'une des revendications 1 à 8.

10. Aéronef **caractérisé en ce qu'**il comporte au moins un siège selon l'une des revendications 1 à 8.

## Claims

1. Seat intended for an aircraft, this seat comprising a sitting portion (4), a movable back (6), as well as guiding means, referred to as first guiding means, for the movement of the back (6) from one edge (16) of the sitting portion to an opposite edge (16) thereof,
in which the back (6) is mounted on the sitting portion (4) via a movable assembly comprising a base (32) movable between one edge (16) of the sitting portion and an opposite edge (16), and further comprising a support (34) pivotably mounted on the movable base (32),
**characterized in that** the movable base (32) is in the form of a stirrup the base of which extends from one lateral edge (14) to the other of the sitting portion (4) and each branch (36) of which extends substantially parallel to a lateral edge (14) and is curved at its free end under the sitting portion (4).

2. Seat according to claim 1, **characterized in that** it also comprises second guiding means for the rotational guiding of the back (6) over approximately 180°.

3. Seat according to claim 2, **characterized in that** the rotational guiding means comprise an axis of rotation (42) substantially corresponding to an axis of symmetry of the back (6).

4. Seat according to one of claims 2 or 3, **characterized in that** the rotational guiding means guide the back (6) In rotation around an axis substantially perpendicular to the sitting portion (4) of the seat.

5. Seat according to one of claims 2 to 4, **characterized in that** the first guiding means provide for the guiding of the movable base (32) in relation to the sitting portion (4) and **In that** the second guiding means provide for the rotational guiding of the support (34) in relation to the movable base (32).

6. Seat according to claim 5, **characterized in that** the first guiding means comprise a groove (40) parallel to the movement of the back (6), formed in the sitting portion (4) of the seat and into which enters a suitably shaped portion (38) of the movable base (32).

7. A seat according to one of claims 1 to 6, **characterized in that** the movable base (32) comprises on respective opposite sides of the sitting portion (4) a handle making it possible to move it.

8. Seat according to one of claims 1 to 6, **characterized in that** the first guiding means comprise a lever (72) on each side of the sitting portion (4), **in that** each lever (72) is guided at each of its ends in a runner (74, 76), and **in that** the movable base (32) is connected to the lever (72).

9. Group of seats, **characterized In that** it comprises at least one seat according to one of claims 1 to 8.

10. Aircraft **characterized In that** it comprises at least one seat according to one of claims 1 to 8.

## Patentansprüche

1. Sitz für ein Flugzeug, wobei dieser Sitz eine Sitzfläche (4), eine bewegliche Rückenlehne (6) sowie erste Führungsmittel genannte Führungsmittel für die Bewegung der Rückenlehne (6) von einem Rand (16) der Sitzfläche zu einem diesem entgegengesetzten Rand (16) umfasst,
bei dem die Rückenlehne (6) auf der Sitzfläche (4) über eine bewegliche Einheit montiert ist, die einerseits eine zwischen einem Rand (16) der Sitzfläche und einem entgegengesetzten Rand (16) bewegliche Basis (32) und andererseits einen Halter (34) umfasst, der auf der beweglichen Basis (32) verschwenkbar montiert ist,
**dadurch gekennzeichnet, dass** die bewegliche Basis (32) in der Form eines Bügels vorliegt, dessen Basis sich von einem Seitenrand (14) der Sitzfläche (4) zum anderen erstreckt und von dem jeder Schenkel (36) sich im Wesentlichen parallel zu einem Seitenrand (14) erstreckt und an seinem freien Ende unter der Sitzfläche (4) gekrümmt ist.

2. Sitz nach Anspruch 1, **dadurch gekennzeichnet, dass** er außerdem zweite Führungsmittel für die Führung der Rückenlehne (6) in Drehung über ungefähr 180° umfasst.

3. Sitz nach Anspruch 2, **dadurch gekennzeichnet, dass** die Mittel zur Führung in Drehung eine Drehachse (42) umfassen, die im Wesentlichen einer Symmetrieachse der Rückenlehne (6) entspricht.

4. Sitz nach einem der Ansprüche 2 oder 3, **dadurch gekennzeichnet, dass** die Mittel zur Führung in Drehung die Rückenlehne (6) in Drehung um eine zur Sitzfläche (4) des Sitzes im Wesentlichen senkrechte Achse führen.

5. Sitz nach einem der Ansprüche 2 bis 4, **dadurch gekennzeichnet, dass** die ersten Führungsmittel die Führung der beweglichen Basis (32) bezüglich der Sitzfläche (4) gewährleisten und dass die zweiten Führungsmittel die Führung des Halters (34) in Drehung bezüglich der beweglichen Basis (32) gewährleisten.

6. Sitz nach Anspruch 5, **dadurch gekennzeichnet, dass** die ersten Führungsmittel eine zur Bewegung der Rückenlehne (6) parallele Nut (40) umfassen, die in der Sitzfläche (4) des Sitzes vorgesehen ist und in die ein Teil (38) der beweglichen Basis (32) von angepasster Form eintritt.

7. Sitz nach einem der Ansprüche 1 bis 6, **dadurch gekennzeichnet, dass** die bewegliche Basis (32) zu beiden Seiten der Sitzfläche (4) einen Griff umfasst, der ihre Bewegung gestattet.

8. Sitz nach einem der Ansprüche 1 bis 6, **dadurch gekennzeichnet, dass** die ersten Führungsmittel einen Hebel (72) auf jeder Seite der Sitzfläche (4) umfassen, dass jeder Hebel (72) an jedem seiner Enden in einer Gleitführung (74, 76) geführt ist und dass die bewegliche Basis (32) mit dem Hebel (72) verbunden ist.

9. Sitzeinheit, **dadurch gekennzeichnet, dass** sie mindestens einen Sitz nach einem der Ansprüche 1 bis 8 umfasst.

10. Flugzeug, **dadurch gekennzeichnet, dass** es mindestens einen Sitz nach einem der Ansprüche 1 bis 8 umfasst.
